# EUROPEAN PATENT SPECIFICATION

(11) **EP 3 313 202 B1**
(45) Date of publication and mention of the grant of the patent: **31.07.2019**
(21) Application number: 16732575.2
(22) Date of filing: 22.06.2016
(51) Int. Cl.: A23L 27/00, A23L 23/10, A23L 27/10

(54) **FLAVOR COMPOSITION FOR FOOD PRODUCTS**
GESCHMACKSZUSAMMENSETZUNG FÜR LEBENSMITTELPRODUKTE
COMPOSITION D'ARÔME POUR PRODUITS ALIMENTAIRES

(30) Priority: 24.06.2015 EP 15173642
(43) Date of publication of application: 02.05.2018
(73) Proprietor: Société des Produits Nestlé S.A., 1800 Vevey (CH)
(72) Inventor: MARITZ, Dirk Jacobus, 78224 Singen (DE); SCHOPP, Silke, 78315 Radolfzell (DE); BORMANN, Gert, 78224 Singen (DE); MONTEIRO DE ARAUJO SILVA, Maria, 78224 Singen (DE); SCHMAUCH, Gregory, 86159 Augsburg (DE); FRITSCH, Helge, 78224 Singen (DE)
(74) Representative: Dinger, Hansjörg
(86) International application number: PCT/EP2016/064333
(87) International publication number: WO 2016/207173

(56) References cited:
- WO-A1-2010/069743
- WO-A1-2012/072399
- WO-A1-2013/092296
- MIYAMOTO K ET AL: "Variation in content of dihydromaleimide and its glucoside in pea seedlings as affected by growth and red light", PLANT SCIENCE LETTERS, ELSEVIER SCIENCE PUBLISHERS LTD, LONDON, GB, vol. 37, no. 1-2, 1 November 1984 (1984-11-01), pages 47-51, XP025696674, ISSN: 0304-4211, DOI: 10.1016/0304-4211(84)90201-3 [retrieved on 1984-11-01]

## Description

### TECHNICAL FIELD

This invention relates to a composition having a natural umami taste and/or enhancing flavor, the use of such compositions in a food product, and a process for preparing such compositions. In particular, the invention relates to umami taste and/or flavor enhancing compositions based on extracts from pea comprising (5R)-(β-D-glucopyranosyloxy)-1,5-dihydro-2*H*-pyrrol-2-one.

### BACKGROUND

Although its existence has only been recently proven, the umami taste is widely recognized as an essential component in culinary food products. Two classes of compounds are known to provide or enhance umami taste. One class provides umami taste as such, and the other acts as side player, enhancing the umami taste of the first class. Monosodium glutamate (MSG) is a tastant recognized as a taste enhancer by food ingredient regulations. MSG provides umami taste as such. The 5'-ribonucleotides guanosine monophosphate and inosine monophosphate are known as taste enhancers. Although they do not have an intrinsic taste, they considerably increase the taste intensity of umami tastants, such as MSG. One drawback of MSG and the ribonucleotides is that the taste they bring to products is one dimensional, and is often described as "artificial" or "instant soup like" by consumers.

Additionally, according to food regulations, MSG and ribonucleotides must be labeled with an E-number, which is perceived negatively by consumers.

Even though MSG and ribonucleotides are both naturally occurring in some foods (e.g. tomato, parmesan cheese, meat) and in breast milk, and have been proven to be safe by several organizations including the World Health Organisation (WHO) and the European Food Safety Authority (EFSA), a publication in the New England Journal of Medicine (Kwok, R.H.M. (1968) Chinese-restaurant syndrome; New England Journal of Medicine; 278(14), 796-796) about a so-called Chinese Restaurant Syndrome sparked speculation among consumers about the purported detrimental effects of MSG and ribonucleotides. This has led many consumers to reject products containing MSG and ribonucleotides.

As a consequence, and although MSG and ribonucleotides are required to build a complete taste profile in a meal, food manufacturers are increasingly trying to remove MSG and ribonucleotides from their products. Further, the doubts consumers have regarding MSG and ribonucleotides are reinforced by the growing number of food labels that advertise the absence of MSG or taste enhancers.

In the search for other taste enhancers to replace these molecules, solutions based on yeast extracts have been developed and are now used. However, the taste provided by yeast extracts is less specific than MSG and ribonucleotides, and does not deliver full taste complexity. Moreover, food products containing such extracts need to be labeled as "yeast extract", which has been shown to be not consumer friendly. Consumers and consumer associations have now started to assert that the use of yeast extracts is a hidden way to add MSG.

Finally, the expectations of consumers concerning food products are clearly moving towards a strong preference for naturality and authenticity, and for the ingredients of the products to be easily identifiable.

There is therefore an ongoing need for a composition having a natural umami taste and/or flavor enhancement which provides a complete and round umami taste, and contains only low levels of naturally occurring MSG.

The applicant has explored extracts of pea for this purpose and found such extracts to be effective in providing umami taste and/or enhancing flavor.

Although pea has been intensively studied (e.g. Jakobsen, H. B. et al. (1998) Aroma Volatiles of Blanched Green Peas (Pisum sativum L.); J. Agric. Food Chem. 46, 3727-3734), there has been almost no investigation into the taste properties of pea.

The aroma of blanched green peas has been determined (Shipton, J. et al. (1969) Extraction of Volatile Compounds from Green Peas (Pisum sativum); J. Agr. Food Chem., 17(5), 1113-1118). The volatile compounds consist mainly of degradation products of fatty acids, especially saturated and monounsaturated six-carbon aldehydes, ketones, alcohols, and their ester derivatives. There has been no report on the taste properties of these compounds.

Different publications from Liu, Teh-Yung; Castelfranco, Paul A. (Archives of Biochemistry and Biophysics, Volume: 123, Issue: 3, Pages: 645-6, Journal, 1968), Miyamoto, K. (Plant Science Letters, 37 (1984) 47-51), Miyamoto, K. (Plant Growth Regulation, Volume: 11, Issue: 4, Pages: 411-17, Journal, 1992), Zemlyanukhin, A. A. (Biochemie und Physiologie der Pflanzen, Volume: 179, Issue: 8, Pages: 679-84, Journal, 1984) have been evaluated the role of isosuccinimide β-glucoside in the growing of peas. None of the publications have been described isosuccinimide β-glucoside as an umami compound.

Volatile compounds extracted from blanched and non-blanched peas have been compared (Barylko-Pikielna, N., Kostyra, E. (2007), Sensory interaction of umami substances with model food matrices and its hedonic effect; Food Quality and Preference, 18(5), 751-758). The umami intensity of pea soup has been evaluated (Maga, J. A. (1987) Organoleptic properties of umami substances; Food Science and Technology (New York, NY, United States), 20, 255-269). This study considered the possibility of enhancing pea flavor by adding MSG, but did not indicate any intrinsic umami taste of pea. Further, it was found that the addition of ribonucleotides decreased the umami intensity.

It is known to look at extracts of some vegetables for the purpose of obtaining flavor or flavor enhancing preparations. One example is WO 2012/072399 which describes extracts from plants, including tomatoes, potato, beets, peas, corn and others. These extracts can be used to prepare functional food ingredients such as taste enhancers. This document discloses examples which relate to tomatoes only. The process described for preparing the extracts has an ion exclusion chromatography step as an essential part of the process. The purpose of this chromatography step is to fractionate the plant extract into two or more fractions that can each be used as different functional food ingredients. The invention described is directed to minimizing the amounts of multivalent cations, particularly the divalent Ca²⁺ and Mg²⁺ ions, relative to the monovalent K⁺ cation. The reason is that divalent cations are thought to reduce the efficiency of the chromatography medium used in the ion exclusion chromatography step. It can readily be seen that the complexities involved in having to prepare the extract by removing multivalent cations prior to the chromatography step, which is itself a complicated and expensive step, mean that the process described in WO 2012/072399 is time consuming, complex and costly. A product having similar attributes and obtained by a process that avoids these steps would clearly have a number of distinct advantages.

WO 2012/038386 describes a method of preparing a plant extract. The method includes the steps of taking juice from a plant, conducting an enzymatic hydrolysis of the proteins, and enriching the low molecular weight compounds present. The extract is said to be useful in culinary preparations for reducing the amount of salt or MSG that would otherwise be added. But this method increases the content of glutamic acid. Concentrated MSG, not purified MSG from a natural source, is perceived by consumers to be similar to adding purified MSG, which is what they wish to avoid. WO 2013/092296 A1 describes a process for preparing a flavour composition having an umami flavour/ taste and a MSG content of less than 1 wt% comprising the steps of: a) heating vegetable matter in water at any given temperature to give cooking water containing flavour-active compounds extracted from the vegetable matter; b) separating the vegetable matter from the cooking water; and c) concentrating the cooking water to provide the flavour composition. The flavour is used in food products such as soups and snacks.

The applicant, in its search for a simple way to provide an effective umami taste and/or enhancing flavor composition, has found a process and a product from that process that delivers the desired characteristics of umami flavor taste enhancement.

It is therefore an object of the invention to provide an umami taste and/or flavor enhancing composition that avoids at least one or more disadvantages of known umami compositions, or at least provides a useful alternative.

### STATEMENTS OF THE INVENTION

In one aspect of the invention there is provided an umami taste and/or flavor enhancing composition which is obtained from cooking or blanching water of peas, preferably green pea, the composition comprising (5R)-(β-D-glucopyranosyloxy)-1,5-dihydro-2*H*-pyrrol-2-one, in the amount of 0.4 to 5 % (by total dry weight of the composition), preferably in the amount of 0.5 to 5 % (by total dry weight of the composition).

The composition may also comprise naturally occurring monosodium glutamate (MSG) in the amount of 0.01 to 2 % (by total dry weight of the composition).

The composition may be in any suitable form including a solution, paste, suspension or slurry in water, a powder, granules, or a tablet. Preferably, the composition has a pH in the range 3 to 8, or in the case of the composition being in solid form the composition has a pH in the range 3 to 8 when dissolved or partially dissolved in water, preferably in the range 4.5 to 6.5.

In a second aspect of the invention there is provided a process for preparing the composition of the invention comprising the steps:
a) heating peas, preferably green peas, or pea material, preferably green pea material, in water,
b) removing solid matter to give an aqueous extract of the peas or pea material, and
c) reducing the water content of the extract to form the composition.

In a further aspect of the invention there is provided the use of a composition of the invention for providing an umami taste and/or flavor enhancing of a food product. The food product is preferably selected from the group comprising bouillons, sauces, soups, snacks, cereals, biscuits, prepared meals, nutritional products, products for food service, flavors and flavor ingredients, oral supplements, pet foods, and beverages.

In another aspect of the invention there is provided a culinary food product containing the composition of the invention in the amount of 1 to 40 % (by total dry weight of the composition).

### DETAILED DESCRIPTION

The invention relates to a composition that provides umami taste and/or enhances the flavor of a food product. The applicant has found that a composition obtained from cooking or blanching water of peas, preferably of green peas, having strong umami taste can be characterised by the presence of specific compound that contribute to the umami taste and/or to the enhancement of flavors in a food product. The specific compound has been determined to be (5R)-(β-D-glucopyranosyloxy)-1,5-dihydro-2*H*-pyrrol-2-one (beta-R).

In the context of this invention, "pea" or "peas" means whole peas or peas, that have been physically transformed in some way, for example by pressing, crushing, pureeing, and includes any peas or pea material commonly known as peas, and specifically including green pea or yellow pea. Preferably, the green pea is either *Pisum sativum* or *Pisum sativum* var. *macrocarpon.* "Pea material" means all variety of peas including husk and pod of peas.

The term "umami" is intended to mean the fifth basic taste (the others are sweet, bitter, salty, and sour), and can be described as a pleasant "brothy" or "meaty" taste with a long lasting, mouthwatering and coating sensation. Its main effect is the ability to provide a balanced taste and rounded total flavor of a dish. Typical umami foods include, for example, fish, shellfish, meats, and vegetables (e.g. mushrooms, tomatoes, cabbage, spinach, celery, and many others).

The composition of the invention may inherently provide umami taste to a food product, meaning that the composition itself has an umami taste. Alternatively or additionally, the composition may enhance the umami taste of a food product, meaning that the composition may not have an umami taste itself but may bring out or increase the umami taste of a food product that is provided by compounds already existing in that food product.

The applicant prepared an aqueous extract of pea, preferably green pea and then subjected that extract to fractionation. Those fractions that exhibited strong umami taste and/or flavor enhancing ability were then analysed for the presence of compounds that may be responsible for delivering the umami effect. It was found that key compounds present in the extract of pea include monosodium glutamate (MSG) and ribonucleotides at a sensory sub-threshold level, and that the responsible compound for umami is (5R)-(β-D-glucopyranosyloxy)-1,5-dihydro-2*H*-pyrrol-2-one (beta-R).

The use of the composition of the invention not only eliminates the need to add externally derived MSG, but also eliminates the need to add any other umami providing substance such as yeast extracts, tomatoes, parmesan or anchovies. Thus, the applicant has found a simple way to deliver an umami taste and/or enhancing flavor to food products without having to add artificial or non-natural ingredients.

In particular, it is thought that at least (5R)-(β-D-glucopyranosyloxy)-1,5-dihydro-2H-pyrrol-2-one is responsible for providing the characteristic umami taste of a pea extract. The composition of the invention comprises (5R)-(β-D-glucopyranosyloxy)-1,5-dihydro-2*H*-pyrrol-2-one (beta-R) in the amount of at least 0.4% (by total dry weight of the composition), preferably 0.4 to 5 %, more preferably 0.5 to 5 %, 0.6 to 5 %, 0.5 to 4 %, 0.5 to 3 %, 0.6 to 4 %, 0.6 to 3.5 %, or 0.6 to 3 %. The composition of the invention comprises (5R)-(β-D-glucopyranosyloxy)-1,5-dihydro-2*H*-pyrrol-2-one (beta-R) in the amount of at least 50ppm, preferably at least 100ppm, preferably at least 150ppm, preferably at least 200ppm, preferably at least 250ppm, preferably at least 300ppm, preferably at least 350ppm, preferably between 50ppm and 2000ppm, preferably between 100ppm and 2000ppm, preferably between 150ppm and 2000ppm, between 200ppm and 1000ppm, between 250ppm and 1000ppm of the total composition.

Aspartic acid, or a derivative thereof, may be present in the amount of 0.01 to 1 % (by total dry weight of the composition), preferably 0.05 to 1 %, or 0.05 to 0.5 %, or 0.07 to 0.63 %, or 0.07 to 0.43 %

Succinic acid, or a derivative thereof, may be present in the amount of 0.05 to 2 % (by total dry weight of the composition), preferably 0.05 to 1.5 %, or 0.1 to 1.4 %, or 0.10 to 1 %, or 0.1 to 0.6 %, or 0.12 to 0.52 %.

The composition of the invention may also contain MSG in the amount of 0.01 to 2 % (by total dry weight of the composition), preferably 0.01 to 1 %, or 0.05 to 0.7 %, or 0.1 to 0.7 %.

The composition of the invention may also contain fructose in the amount of 1 to 4 % (by total dry weight of the composition), preferably 1.5 to 3.5 %, or 2 to 3 %.

The composition of the invention may also contain glucose in the amount of 10 to 30 % (by total dry weight of the composition), preferably 11 to 26 %, or 11 to 25 %.

The composition of the invention may also contain sucrose in the amount of 10 to 44 % (by total dry weight of the composition), preferably 10 to 40 %, or 11 to 35 %.

The composition of the invention may also contain sodium citrate in the amount of 0.5 to 5 % (by total dry weight of the composition), preferably 0.5 to 4.0 %, or 1.40 to 3.80 %.

In the process of the invention, the peas or pea material are heated in water typically for a period of 2 minutes to 4 hours, but may be heated for any time sufficient for the extraction without degrading of the product. The heating temperature is also selected to avoid degradation of the product, but is preferably between 70 °C and 100 °C. The term "cooking water" means that the peas or pea material are heated in water typically for a period of 15 minutes to 4 hours between 70 °C and 100 °C. The term "blanching water" means that the peas or pea material are heated in water between 70 °C and 100 °C or by using water steam typically for a period of 2 minutes to 15 min.

For some species of pea, extraction is preferably conducted in a vacuum bag immersed in a water bath. Using this technique, degradation of the product may be minimised or avoided. For example, the extraction temperature maybe between 60 °C and 90 °C, and for a time between 10 and 48 hours.

Following the heating step, and separation of the solid material, the volume of water can be reduced at any temperature and for any time suitable to avoid degradation of the product. For example, between 90 °C and 100 °C for 10 to 60 minutes, depending on the volume of material. Reduction is preferably achieved when at least 50 %, preferably at least 70%, preferably at least 90% of the water has been removed, but can be stopped at any time depending on the water content desired for the composition.

Removal of water may be carried out using any standard technique including reduction, evaporation, concentration via reverse osmosis, chromatographic methods, or any drying process.

Separation of the solid material from the aqueous extract may also be carried out using any standard technique such as straining, decanting or filtering. It is preferred to remove solid particles that are larger than about 1 mm.

Membrane filtration to remove large particles and to reduce the water content followed by heating may also lead to a strong umami taste. It has been found that a heating step at some point after the extraction step is not important for generating other umami flavor compounds for example via Maillard reaction. In other words, umami compounds and/or umami enhancing compounds are present in the peas themselves or in the extract and are not produced when the extract is heated.

The flavor composition may be in solid or liquid form, for example a tablet or cube, a powder, a paste, granules, or a solution or suspension in water.

The food product of the invention, prepared from or containing a flavor composition of the invention, may be selected from the group comprising culinary products, such as bouillons, sauces, soups, dry food products such as snacks, cereals and biscuits, chilled and frozen products, such as prepared meals, nutritional products, flavors and flavor ingredients, food supplements, pet food products, and beverages. A typical food product would comprise the umami flavour and/or flavour enhancing composition in an amount of 1 to 40 % by total dry weight of the food product, preferably 3 to 40%, preferably 3 to 35%, preferably 5 to 35%, preferably 5 to 30%, preferably 8 to 30%, preferably 10 to 30%, preferably 10 to 25.

A general process for preparing a pea extract is described in Example 1. After cooking or blanching of the peas and subsequent straining to remove the solid fragments, the extract is concentrated and dried as appropriate.

Table 1 in Example 2 shows the composition of the pea extracts for *Pisum sativum* and *Pisum sativum* var. *macrocarpon* obtained from cooking water of peas. Additionally Table 1 in Example 2 shows a composition of the pea extract for *Pisum sativum* from blanching water of peas. It is clear from Example 3 that the umami impression cannot be explained solely by the MSG content. The MSG taste threshold is described in the literature as between 0.255 and 0.5 g MSG/L (1.5-3 mmol/L) (Behrens, M., et al. (2011) Sweet and Umami Taste: Natural Products, Their Chemosensory Targets, and Beyond; Angew. Chem. Int. Ed., 50, 2220-2242). Therefore the MSG content for the *Pisum sativum* extract is below the taste threshold. To confirm the umami taste of the pea extract, all MSG containing ingredients (MSG, ribonucleotides and yeast extract) were removed from a standard bouillon. Pea extract was added. Table 2 in Example 3 shows the umami impression between 0 (no umami) to 3 (strong umami) of a trained panel. The effect of the addition of a pea extract to a bouillon base (which has no intrinsic umami taste) is to provide a strong umami taste. It is clear that the pea extract alone promotes umami taste, and that this effect is even greater in the presence of MSG.

A standard bouillon containing no MSG but added pea extract was compared to the same standard bouillon containing MSG. The results are shown in Table 3 of Example 4. A trained panel rated the bouillons on a scale from 0 (no umami) to 10 (strong umami). This gives evidence that the pea extract delivers a strong umami even it is less than to MSG itself, but the taste is received as being more natural and round mouthfeel instead of using MSG alone.

As used in this specification, the words "comprises", "comprising", and similar words, are not to be interpreted in an exclusive or exhaustive sense. In other words, they are intended to mean "including, but not limited to.

The invention is further described with reference to the following examples.

### EXAMPLES

### Example 1: General method for preparing pea extract

A general method for preparing the composition of the invention is as follows:
- heat peas or pea material either at 95-100 °C for about 2-20 min, (preferable for fresh pea), to allow a first extraction of the flavor compound.
- strain to remove the solid fragments (larger than 1 mm) and retain the aqueous extract containing the flavor compounds.
- reduce the water content to concentrate the flavor compounds.

### Example 2: General composition of the pea extract

Extracts prepared according to Example 1 were found to have the compositions shown in Table 1.

**Table 1: General composition of the pea extract from different peas (based on dry mass).**

| **Compound** | ***Pisum sativum (cooking water)^{a)}*** | ***Pisum sativum* var. *macrocarpon (cooking water)^{a)}*** | ***Pisum sativum (blanching water)^{b)}*** |
|---|---|---|---|
| MSG (%) | 0.11-0.61 | 0.05-0.23 | 0.33 |
| Succinic acid (%) | 0.12-0.52 | 0.94-1.32 | 0.36 |
| Aspartic acid (%) | 0.07-0.43 | 0.18-0.63 | 0.21 |
| IMP-Na₂ (%) | 0.02-0.15 | 0.005-0.01 | 0.03 |
| GMP-Na₂ (%) | 0.32-1.50 | 0.05-0.16 | 0.03 |
| Fructose (%) | 2.01-2.83 | 2.36-3.12 | 2.10 |
| Glucose (%) | 11.24-24.67 | 21.85-25.38 | 18.3 |
| Lactose (%) | 0.32-2.63 | 0.42-0.97 | 0.3 |
| Maltose (%) | 0.32-2.63 | 0.52-1.52 | 1.2 |
| Sucrose (%) | 11.09-34.90 | 12.64-40.06 | 22.50 |
| NaCl (%) | 0.96-2.04 | 0.12-1.39 | 1.74 |
| Citric acid | 1.42-3.76 | 0.86-1.88 | 3.45 |
| Beta-R | 0.15-1.44 | 0.51-2.22 | 0.98 |

| | | | |
|---|---|---|---|
| a) 10 different pea cooking water samples have been analysed. The variation comes from the pea itself, the origin of the pea (country) and the harvest time. b) One pea blanching water sample has been analysed. | | | |

The compounds were isolated and characterized using two-dimensional preparative chromatography. For example, size exclusion chromatography in the first dimension, then hydrophilic interaction column (normal phase) in a second dimension. Identification of compounds was carried out using conventional analytical methods such as LC-MS or NMR.

Surprisingly it has been found, that (5R)-(β-D-glucopyranosyloxy)-1,5-dihydro-2*H-*pyrrol-2-one (beta-R) is responsible to provide and enhance an umami taste. At least 0.1% (by total dry weight of the composition) of the composition of the invention comprises (5R)-(β-D-glucopyranosyloxy)-1,5-dihydro-2*H*-pyrrol-2-one (beta-R). It is beneficial to provide an umami taste and/or flavor enhancing compositions from peas if at least 0.4% (by total dry weight of the composition) of the composition of the invention comprises (5R)-(β-D-glucopyranosyloxy)-1,5-dihydro-2*H*-pyrrol-2-one (beta-R). Surprisingly it has been found, that the blanching water of peas results in a comparable composition compared to the cooking water of peas.

### Example 3: Sensory evaluation of pea extract

Different pea extract from *Pisum sativum* containing the composition as described in table 1 has been used to define the threshold concentrates in a sensory panel of 6 trained persons. The technical tasting was measured versus a control sample. Tasters were asked to judge the different products according to umami intensity on a 3-point scale.

**Table 2:**

| 25g or 75g or 125g of the pea extract *Pisum sativum* containing 0.2% (by total dry weight of the composition) of (5R)-(β-D-glucopyranosyloxy)-1,5-dihydro-2*H*-pyrrol-2-one (beta-R) has been dissolved within 1 liter of water. | | | | | |
|---|---|---|---|---|---|
| Concentration pea extract C; g/l | No umami | Umami 1 | Umami 2 | Umami 3 | Comments |
| 25g/l | 6 | 0 | 0 | 0 | Sweet, watery |
| 75g/l | 3 | 3 | 0 | 0 | off note |
| 125g/l | 0 | 4 | 2 | 0 | bitter off note |

This result shows that pea extract *Pisum sativum* containing 0.2% (by total dry weight of the composition) of (5R)-(β-D-glucopyranosyloxy)-1,5-dihydro-2*H*-pyrrol-2-one (beta-R) has an umami effect but also an unpleasant off note which gets bitter at higher concentrations is superposing the umami effect.

**Table 3:**

| 10g or 30g or 50g of the pea extract *Pisum sativum* containing 0.5% (by total dry weight of the composition) of (5R)-(β-D-glucopyranosyloxy)-1,5-dihydro-2*H*-pyrrol-2-one (beta-R) has been dissolved within 1 liter of water. | | | | | |
|---|---|---|---|---|---|
| Concentration pea extract C; g/l | No umami | Umami 1 | Umami 2 | Umami 3 | Comments |
| 10g/l | 6 | 0 | 0 | 0 | Sweet, watery |
| 30g/l | 1 | 4 | 2 | 0 | Mouthfulness, round |
| 50g/l | 0 | 0 | 2 | 4 | Umami, roundness, lingering, long lasting |

A pea extract *Pisum sativum* containing 0.5% (by total dry weight of the composition) of (5R)-(β-D-glucopyranosyloxy)-1,5-dihydro-2*H*-pyrrol-2-one (beta-R) has an umami effect without an unpleasant off note. It can be calculated that the threshold concentrate for this example is 147ppm.

### Example 4: Sensory evaluation of pea extract within a bouillon

This example shows the results of an evaluation of umami impression of bouillon bases comparing bouillons containing pea extract with bouillons containing no pea extract. The pea extract used was obtained by a blanching water process containing the composition as described in table 1.

**Table 4: Evaluation of the umami impression of the pea extract in different bouillon bases.**

| **Bouillon Base** | **Umami Rating** |
|---|---|
| Containing no MSG | 0 |
| Containing 10wt% pea extract and no added MSG | 2.5 |
| Containing sub-threshold MSG (60mg/L) | 0 |
| Containing 10wt% pea extract and sub-threshold MSG added (60 mg/L) | 2.83 |

The results given are the average rating of a panel of six experienced tasters rating the umami intensity (0 = no umami; 1 = umami barely perceivable; 2 = umami clearly perceivable; 3 = strong umami).

### Example 5: Comparison of standard bouillons containing pea extract or MSG

This example shows the results of a comparison between the umami impression of a standard bouillon (containing MSG) and a bouillon containing pea extract but no MSG. The pea extract used was obtained by a blanching water process containing the composition as described in table 1.

**Table 5: Comparison of the umami impression of a standard bouillon (containing MSG) and a bouillon without MSG but containing pea extract.**

| **Bouillon** | **Umami Rating** |
|---|---|
| Containing MSG | 5 |
| Containing 18wt% pea extract and no MSG | 4.4 |

The results given are the average rating of a panel of 12 experienced tasters rating the umami intensity (0 = no umami; 10 = strong umami). In addition the taste of the bouillon containing pea extract has been described as being more natural and given a round mouthfeel.

## Claims

1. A composition obtained from cooking or blanching water of peas, preferably green peas, comprising (5R)-(β-D-glucopyranosyloxy)-1,5-dihydro-2*H*-pyrrol-2-one in an amount of at least 0.4% (by total dry weight of the composition) for umami taste and/or flavor enhancing of a food product.

2. A composition according to claim 1, wherein the pea is selected from *Pisum sativum* or *Pisum sativum* var. *macrocarpon.*

3. A composition as claimed in any one of claims 1 to 2, further comprising monosodium glutamate (MSG) in the amount of 0.01 to 2 % (by total dry weight of the composition), preferably 0.01 to 1%.

4. A composition as claimed in any one of claims 1 to 3, wherein the composition is in the form of a solution, paste, suspension or slurry in water.

5. A composition as claimed in any one of claims 1 to 4, wherein the composition is in the form of a powder, granules, or a tablet.

6. A composition as claimed in any one of claims 1 to 5, which composition has a pH in the range 3 to 8, or in the case of the composition being in solid form the composition has a pH in the range 3 to 8 when dissolved or partially dissolved in water.

7. A process for preparing a composition according to any of claims 1 to 6 comprising the steps:
a) heating green peas or green pea material in water,
b) removing solid matter to give an aqueous extract of the peas or pea material, and
c) reducing the water content of the extract to form the composition.

8. The use of a composition according to any of claims 1 to 7 for umami taste and/or flavour enhancing of a food product.

9. The use as claimed in claim 8, wherein the food product is selected from the group comprising bouillons, sauces, soups, snacks, cereals, biscuits, prepared meals, nutritional products, products for foodservice, flavors and flavor ingredients, oral supplements, pet food products, and beverages.

10. A culinary food product containing the composition according to any one of claims 1 to 6 in the amount of 1 to 40 % (by total dry weight of the composition), preferably 5 to 30%.

## Patentansprüche

1. Zusammensetzung, erhalten durch Kochen oder Blanchieren mit Wasser von Erbsen, vorzugsweise grünen Erbsen, umfassend (5R)-(β-D-Glucopyranosyloxy)-1,5-dihydro-2*H*-pyrrol-2-on in einer Menge von mindestens 0,4 Gew.-% (bezogen auf das Gesamttrockengewicht der Zusammensetzung) zur Umami-Geschmacks- und/oder Geschmacksverstärkung eines Nahrungsmittelprodukts.

2. Zusammensetzung nach Anspruch 1, wobei die Erbse aus *Pisum sativum* oder *Pisum sativum var. Macrocarpon* ausgewählt ist.

3. Zusammensetzung nach einem der Ansprüche 1 bis 2, ferner umfassend Mononatriumglutamat (MSG) in einer Menge von 0,01 bis 2 Gew.-% (bezogen auf das Gesamttrockengewicht der Zusammensetzung), vorzugsweise 0,01 bis 1 Gew.-%.

4. Zusammensetzung nach einem der Ansprüche 1 bis 3, wobei die Zusammensetzung in Form einer Lösung, Paste, Suspension oder Aufschlämmung in Wasser vorliegt.

5. Zusammensetzung nach einem der Ansprüche 1 bis 4, wobei die Zusammensetzung in Form eines Pulvers, Granulats oder einer Tablette vorliegt.

6. Zusammensetzung nach einem der Ansprüche 1 bis 5, wobei die Zusammensetzung einen pH-Wert im Bereich von 3 bis 8 hat, oder wenn die Zusammensetzung in fester Form vorliegt, die Zusammensetzung einen pH-Wert im Bereich von 3 bis 8 hat, wenn sie in Wasser gelöst oder teilweise gelöst ist.

7. Verfahren zur Herstellung einer Zusammensetzung nach einem der Ansprüche 1 bis 6, umfassend die Schritte:
a) Erhitzen von grünen Erbsen oder grünem Erbsenmaterial in Wasser,
b) Entfernen von Feststoffen, um einen wässrigen Extrakt der Erbsen oder des Erbsenmaterials zu erhalten, und
c) Reduzieren des Wassergehalts des Extrakts zum Bilden der Zusammensetzung.

8. Verwendung einer Zusammensetzung nach einem der Ansprüche 1 bis 7 zur Umami-Geschmacks- und/oder Geschmacksverstärkung eines Lebensmittelprodukts.

9. Verwendung nach Anspruch 8, wobei das Nahrungsmittelprodukt aus der Gruppe ausgewählt ist, die Bouillons, Saucen, Suppen, Snacks, Cerealien, Kekse, Fertiggerichte, Ernährungsprodukte, Gastronomieprodukte, Aromastoffe und Aromabestandteile, Nahrungsergänzungsmittel, Tierfutterprodukte und Getränke umfasst.

10. Kulinarisches Nahrungsmittelprodukt, enthaltend die Zusammensetzung nach einem der Ansprüche 1 bis 6 in einer Menge von 1 bis 40 Gew.-% (bezogen auf das Gesamttrockengewicht der Zusammensetzung), vorzugsweise 5 bis 30 Gew.-%.

## Revendications

1. Composition obtenue à partir d'eau de cuisson ou de blanchissement de pois, de préférence des petits pois, comprenant de la (5R)-(β-D-glucopyranosyloxy)-1,5-dihydro-2*H*-pyrrol-2-one en une quantité d'au moins 0,4 % (en poids sec total de la composition) pour renforcer le goût umami et/ou la saveur d'un produit alimentaire.

2. Composition selon la revendication 1, dans laquelle le pois est choisi parmi *Pisum sativum* ou *Pisum sativum* var. *macrocarpon.*

3. Composition selon l'une quelconque des revendications 1 à 2, comprenant en outre du glutamate monosodique (MSG) dans la quantité de 0,01 à 2 % (en poids sec total de la composition), de préférence 0,01 à 1 %.

4. Composition selon l'une quelconque des revendications 1 à 3, dans laquelle la composition est sous la forme d'une solution, d'une pâte, d'une suspension ou d'une bouillie dans l'eau.

5. Composition selon l'une quelconque des revendications 1 à 4, dans laquelle la composition est sous la forme d'une poudre, de granules ou d'un comprimé.

6. Composition selon l'une quelconque des revendications 1 à 5, laquelle composition a un pH dans la plage allant de 3 à 8, ou dans le cas de la composition étant sous forme solide la composition a un pH dans la plage allant de 3 à 8 lorsqu'elle est dissoute ou partiellement dissoute dans de l'eau.

7. Procédé de préparation d'une composition selon l'une quelconque des revendications 1 à 6 comprenant les étapes :
a) chauffage de petits pois ou de matériau de petit pois dans de l'eau,
b) élimination de la matière solide pour donner un extrait aqueux des pois ou du matériau de pois, et
c) réduction de la teneur en eau de l'extrait pour former la composition.

8. Utilisation d'une composition selon l'une quelconque des revendications 1 à 7 pour renforcer le goût umami et/ou la saveur d'un produit alimentaire.

9. Utilisation selon la revendication 8, dans laquelle le produit alimentaire est choisi dans le groupe comprenant des bouillons, des sauces, des soupes, des en-cas, des céréales, des biscuits, des plats préparés, des produits nutritionnels, des produits pour restauration, des arômes et ingrédients d'arôme, des compléments oraux, des produits alimentaires pour animal de compagnie et des boissons.

10. Produit alimentaire culinaire contenant la composition selon l'une quelconque des revendications 1 à 6 dans la quantité de 1 à 40 % (en poids sec total de la composition), de préférence 5 à 30 %.
